# EUROPEAN PATENT APPLICATION

(11) **EP 4 220 418 A1**
(43) Date of publication of application: **02.08.2023**
(21) Application number: 23150477.0
(22) Date of filing: 05.01.2023
(51) Int. Cl.: G06F 13/10, G06F 16/00, G11B 27/11, G06F 3/06

(54) **INFORMATION PROCESSING APPARATUS, INFORMATION PROCESSING METHOD, AND INFORMATION PROCESSING PROGRAM**

(30) Priority: 26.01.2022 JP 2022010285
(71) Applicant: FUJIFILM Corporation, Tokyo 106-8620 (JP)
(72) Inventor: OISHI, Yutaka, Tokyo, 106-8620 (JP); KONDO, Michitaka, Tokyo, 106-8620 (JP); OTSUKA, Misaki, Tokyo, 106-8620 (JP); MASUDA, Yuko, Tokyo, 106-8620 (JP)
(74) Representative: Klunker IP Patentanwälte PartG mbB

(57) **Abstract**

An information processing apparatus reads definition information that is common to a plurality of magnetic tapes and defines a plurality of pieces of data included in archive data, generates the same number of pieces of the archive data as the number of the magnetic tapes based on the definition information, the archive data being obtained by grouping the plurality of pieces of data, and performs control of recording the plurality of pieces of generated archive data on the plurality of magnetic tapes in one-to-one correspondence.

## Description

### BACKGROUND OF THE INVENTION

### 1. Field of the Invention

The present disclosure relates to an information processing apparatus, an information processing method, and an information processing program.

### 2. Description of the Related Art

WO2020/066389A discloses a technique of recording the same data on a plurality of magnetic tapes. In the technique, a plurality of pieces of data are grouped for each attribute and are recorded on the magnetic tapes.

JP2009-093571A discloses a technique of grouping pieces of data having a size equal to or larger than a certain value and recording the pieces of data on a magnetic tape in order to efficiently record the data on the magnetic tape.

### SUMMARY OF THE INVENTION

In a case where an information processing apparatus that controls recording of data on a magnetic tape performs control of reading data stored in a storage device such as a disk device and recording the data on the magnetic tape, it is desirable to reduce a load on the storage device. However, the techniques described in WO2020/066389A and JP2009-093571A have room for improvement from a viewpoint of reducing a load on the storage device that stores data in a case of recording data on the magnetic tape.

The present disclosure has been made in view of the above circumstances, and an object of the present disclosure is to provide an information processing apparatus, an information processing method, and an information processing program capable of reducing a load on a storage device that stores data in a case of recording data on a magnetic tape.

According to an aspect of the present disclosure, there is provided an information processing apparatus that performs control of recording the same data on a plurality of magnetic tapes, the apparatus including: at least one processor, in which the processor is configured to read definition information that is common to the plurality of magnetic tapes and defines a plurality of pieces of data included in archive data, generate the same number of pieces of the archive data as the number of the magnetic tapes based on the definition information, the archive data being obtained by grouping the plurality of pieces of data, and perform control of recording the plurality of pieces of generated archive data on the plurality of magnetic tapes in one-to-one correspondence.

In the information processing apparatus according to the aspect of the present disclosure, the definition information may include information representing a storage position on a storage device at which data having a size equal to or larger than a threshold value is stored, and the processor may be configured to read data having a size equal to or larger than the threshold value from the storage device based on the information in a case of generating the archive data.

Further, in the information processing apparatus according to the aspect of the present disclosure, the definition information may include data having a size smaller than the threshold value, and the processor may be configured to read data having a size smaller than the threshold value from the definition information in a case of generating the archive data.

Further, in the information processing apparatus according to the aspect of the present disclosure, the processor may be configured to execute processing of generating the same number of pieces of archive data as the number of the magnetic tapes in parallel.

Further, in the information processing apparatus according to the aspect of the present disclosure, the archive data may be obtained by grouping a plurality of objects including data and metadata related to the data, and the definition information may include the metadata of each of the plurality of objects included in the archive data and information representing a storage position on a storage device at which the data corresponding to the metadata is stored. In addition, the processor may be configured to read the data from the storage device based on the information, and read the metadata from the definition information in a case of generating the archive data.

Further, according to another aspect of the present disclosure, there is provided an information processing method executed by a processor of an information processing apparatus that includes at least one processor and performs control of recording the same data on a plurality of magnetic tapes, the method including: reading definition information that is common to the plurality of magnetic tapes and defines a plurality of pieces of data included in archive data; generating the same number of pieces of the archive data as the number of the magnetic tapes based on the definition information, the archive data being obtained by grouping the plurality of pieces of data; and performing control of recording the plurality of pieces of generated archive data on the plurality of magnetic tapes in one-to-one correspondence.

Further, according to still another aspect of the present disclosure, there is provided an information processing program for causing a processor of an information processing apparatus that includes at least one processor and performs control of recording the same data on a plurality of magnetic tapes to execute a process including: reading definition information that is common to the plurality of magnetic tapes and defines a plurality of pieces of data included in archive data; generating the same number of pieces of the archive data as the number of the magnetic tapes based on the definition information, the archive data being obtained by grouping the plurality of pieces of data; and performing control of recording the plurality of pieces of generated archive data on the plurality of magnetic tapes in one-to-one correspondence.

According to the present disclosure, it is possible to reduce a load on a storage device that stores data in a case of recording data on a magnetic tape.

### BRIEF DESCRIPTION OF THE DRAWINGS

Fig. 1 is a block diagram illustrating an example of a configuration of an information processing system.
Fig. 2 is a diagram for explaining an object.
Fig. 3 is a diagram for explaining a packed object.
Fig. 4 is a diagram for explaining that an object is multiplexed and recorded on a plurality of magnetic tapes.
Fig. 5 is a block diagram illustrating an example of a hardware configuration of an information processing apparatus.
Fig. 6 is a block diagram illustrating an example of a functional configuration of the information processing apparatus.
Fig. 7 is a diagram illustrating an example of definition information.
Fig. 8 is a diagram for explaining processing of generating a packed object.
Fig. 9 is a diagram for explaining processing of recording a plurality of packed objects on a plurality of magnetic tapes.
Fig. 10 is a flowchart illustrating an example of object recording processing.
Fig. 11 is a diagram for explaining object recording processing according to a comparative example.
Fig. 12 is a diagram for explaining object recording processing according to an embodiment.

### DESCRIPTION OF THE PREFERRED EMBODIMENTS

Hereinafter, an example of an embodiment for performing a technique according to the present disclosure will be described in detail with reference to the drawings.

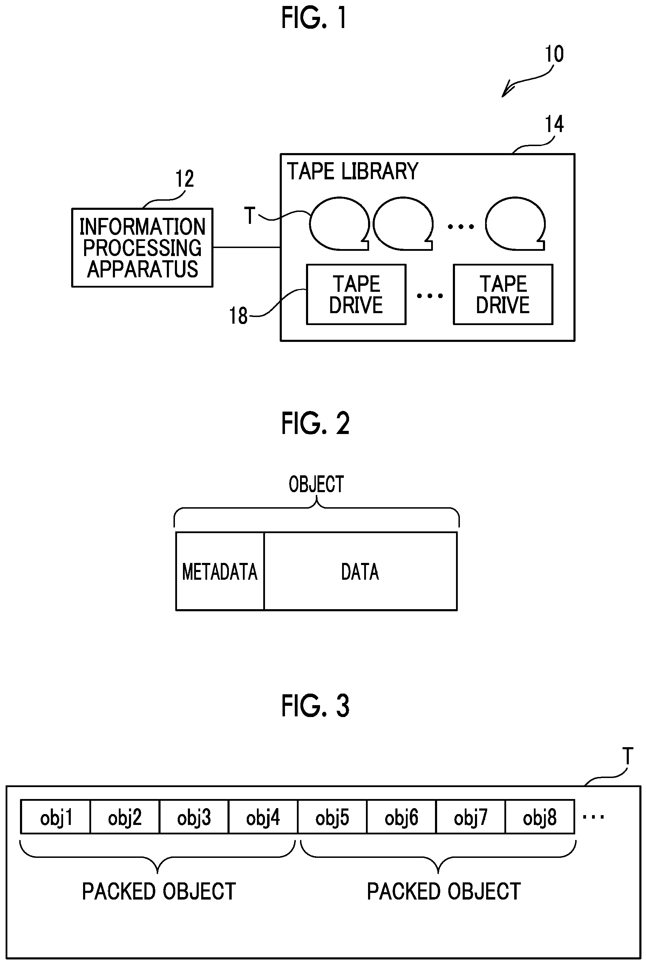

First, a configuration of an information processing system 10 according to the present embodiment will be described with reference to Fig. 1. As illustrated in Fig. 1, the information processing system 10 includes an information processing apparatus 12 and a tape library 14. Examples of the information processing apparatus 12 include a server computer and the like.

The tape library 14 includes a plurality of slots (not illustrated) and a plurality of tape drives 18, and each slot includes a magnetic tape T as an example of a recording medium. Each tape drive 18 is connected to the information processing apparatus 12. The tape drive 18 writes or reads data to or from the magnetic tape T under a control of the information processing apparatus 12. Examples of the magnetic tape T include a linear tape-open (LTO) tape.

In a case where the information processing apparatus 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally included.

In the present embodiment, as illustrated in Fig. 2 as an example, as a unit for handling data to be recorded in the magnetic tape T, an example of an embodiment in which an object including data to be saved by a user such as document data and image data and metadata related to the data is applied will be described. In the example of Fig. 2, the metadata is referred to as "meta". A storage system that handles the object is called an object storage system. The metadata includes, for example, identification information of an object such as an object key, and attribute information such as an object name, a data size, and a time stamp. The recording order of the data and the metadata when recording the object in the magnetic tape T is not particularly limited, and may be an order of the metadata and the data or an order of the data and the metadata.

In addition, in the present embodiment, as illustrated in Fig. 3 as an example, a plurality of objects are recorded on the magnetic tape T in units of objects (hereinafter, referred to as a "packed object") grouped according to a predetermined rule (hereinafter, referred to as a "packing rule"). This aims to reduce overhead due to issuance of a command for instructing the tape drive 18 to record an object in a case where the information processing apparatus 12 records the object on the magnetic tape T. The object is an example of data to be recorded on the magnetic tape T, and the packed object is an example of archive data obtained by grouping a plurality of pieces of data. "Obj" in Fig. 3 represents an object. Fig. 3 illustrates an example in which one packed object includes four objects. On the other hand, the present embodiment is not limited thereto. One packed object may include three or less objects, or may include five or more objects. In addition, the number of objects included in the packed object may not be the same.

Examples of the packing rule include a rule for grouping a plurality of objects including pieces of data having the same extension into the same packed object and a rule for grouping a plurality of objects that are likely to be read at the same time into the same packed object. In addition, examples of the packing rule include a rule for grouping a plurality of objects into one packed object such that a size of one packed object is equal to or larger than a predetermined lower limit value and is smaller than a predetermined upper limit value. In addition, examples of the packing rule include a rule for grouping a plurality of objects into one packed object such that the number of objects included in one packed object is equal to or larger than a predetermined lower limit value and is smaller than a predetermined upper limit value. In addition, a plurality of packing rules may be combined.

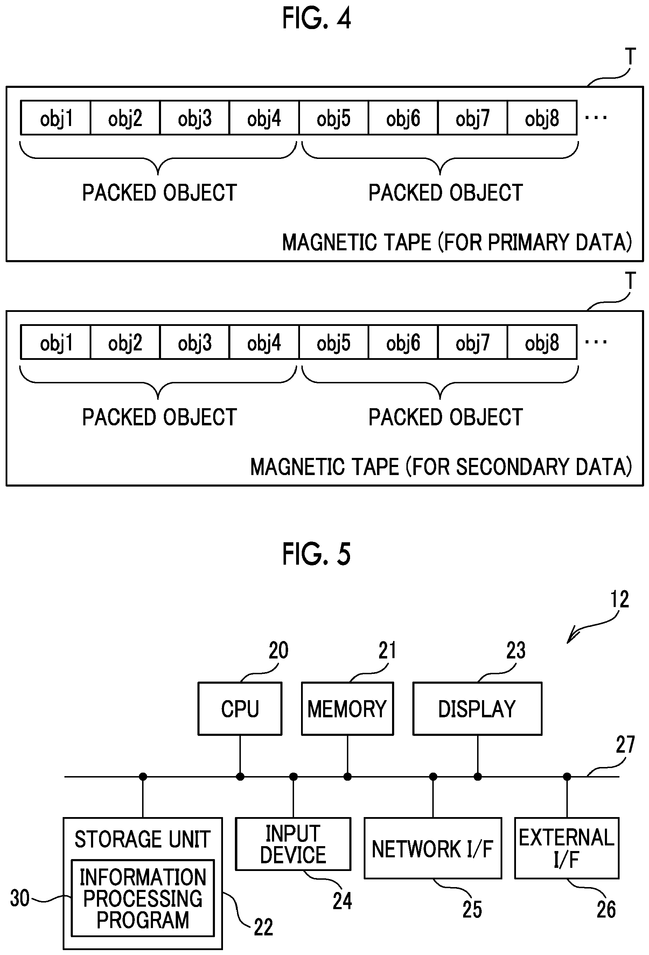

Further, in the present embodiment, the objects are recorded on a plurality of magnetic tapes T with redundancy. Specifically, as illustrated in Fig. 4 as an example, the same object is multiplexed and recorded on a plurality of magnetic tapes T. In the present embodiment, as illustrated in Fig. 4, a case where the same object is recorded on two magnetic tapes T, that is, a case where a multiplexing degree is 2 is described as an example. On the other hand, the multiplexing degree may be 3 or more.

In the two magnetic tapes T, a first magnetic tape T is used as a magnetic tape T for primary data, and a second magnetic tape T is used as a magnetic tape T for secondary data. In a normal state, an object is read from the magnetic tape T for primary data. In a case where an object cannot be read from the magnetic tape T for primary data, an object is read from the magnetic tape T for secondary data.

Next, a hardware configuration of the information processing apparatus 12 according to the present embodiment will be described with reference to Fig. 5. As illustrated in Fig. 5, the information processing apparatus 12 includes a central processing unit (CPU) 20, a memory 21 as a temporary memory area, and a non-volatile storage unit 22. Further, the information processing apparatus 12 includes a display 23 such as a liquid crystal display, an input device 24 such as a keyboard and a mouse, a network interface (I/F) 25 connected to a network, and an external I/F 26 to which each tape drive 18 is connected. The CPU 20, the memory 21, the storage unit 22, the display 23, the input device 24, the network I/F 25, and the external I/F 26 are connected to a bus 27. The CPU 20 is an example of a processor.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

On the other hand, the information processing apparatus 12 according to the present embodiment receives the data and the metadata transmitted from an external apparatus such as a user terminal. For transmission of the data from the external apparatus, for example, a hypertext transfer protocol (HTTP) application programming interface (API) provided from the information processing system 10 is used. In this case, for example, the data to be transmitted by a user is included in a body portion of HTTP, and the metadata related to the data is included in a header portion of HTTP. The information processing apparatus 12 stores the received data and the received metadata in the storage unit 22 by associating the received data with the received metadata. Further, the information processing apparatus 12 has a function of performing control of multiplexing and recording the packed object in a plurality of (in the present embodiment, two) magnetic tapes T, the packed object being obtained by grouping a plurality of objects including a plurality of sets of the data and the metadata stored in the storage unit 22.

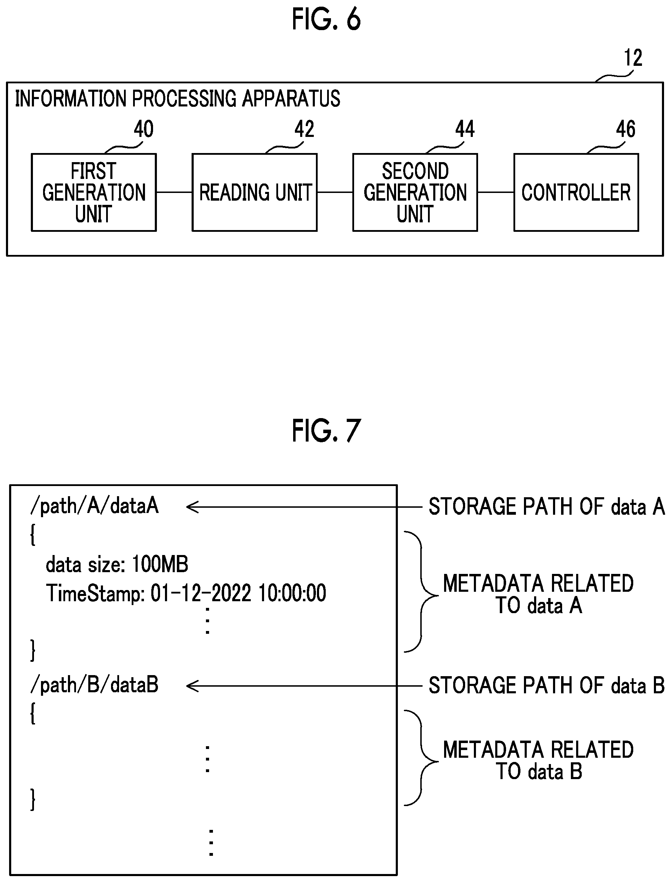

Next, a functional configuration of the information processing apparatus 12 according to the present embodiment will be described with reference to Fig. 6. As illustrated in Fig. 6, the information processing apparatus 12 includes a first generation unit 40, a reading unit 42, a second generation unit 44, and a controller 46. In a case where the CPU 20 executes the information processing program 30, the information processing apparatus 12 functions as the first generation unit 40, the reading unit 42, the second generation unit 44, and the controller 46.

The first generation unit 40 generates definition information that is common to a plurality of magnetic tapes T and defines a plurality of objects included in the packed object. Specifically, first, the first generation unit 40 specifies a plurality of objects corresponding to a packing rule which is set, from object groups stored in the storage unit 22. Next, the first generation unit 40 generates definition information including metadata of each of the plurality of specified objects. At this time, the first generation unit 40 includes, for data of each of the plurality of specified objects, information representing a storage position on the storage unit 22 at which the data is stored (hereinafter, referred to as a "storage path") in the definition information, the storage unit 22 being as an example of a storage device. That is, one piece of definition information in which each object included in the packed object is defined is generated corresponding to one packed object. In addition, the first generation unit 40 performs control of storing the generated definition information in the storage unit 22.

Fig. 7 illustrates an example of definition information generated by the first generation unit 40. As illustrated in Fig. 7, definition information according to the present embodiment includes metadata of each of a plurality of objects included in a packed object and a storage path of data corresponding to the metadata. In the example of Fig. 7, the storage path is expressed in a form of an absolute path in a file system. Further, in the example of Fig. 7, the metadata is expressed in a text form within curly braces ({ }). The metadata may be expressed in a binary form.

The reading unit 42 reads the definition information which is generated by the first generation unit 40 and is stored in the storage unit 22.

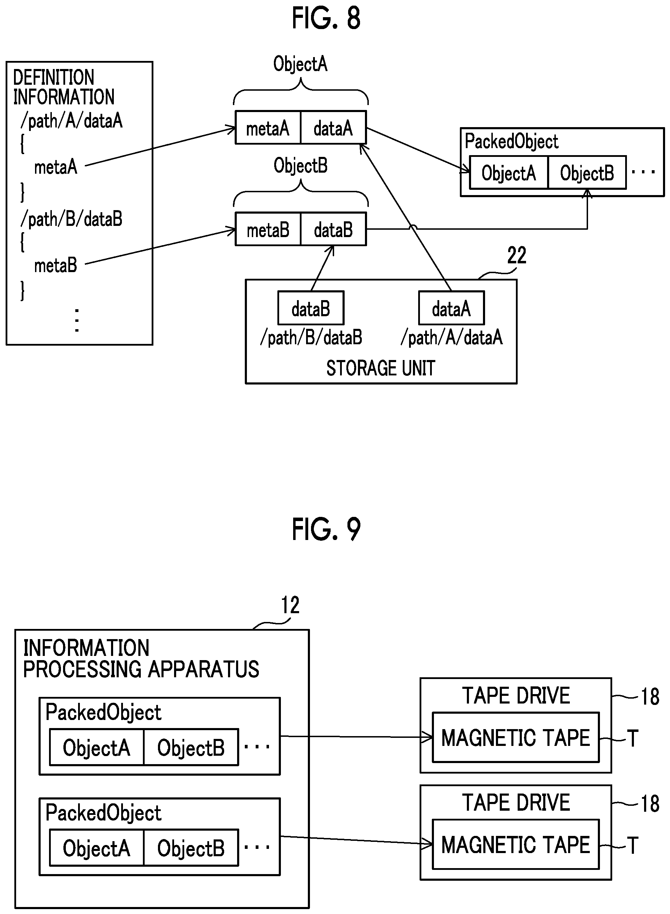

The second generation unit 44 generates the same number of packed objects as the number of magnetic tapes T (that is, the same number as the multiplexing degree) based on the definition information which is read by the reading unit 42, the packed object being obtained by grouping a plurality of objects. As illustrated in Fig. 8 as an example, in a case of generating a packed object, the second generation unit 44 reads the data from the storage unit 22 based on the storage path and reads the metadata from the definition information. In the present embodiment, the second generation unit 44 executes processing of generating the same number of packed objects as the number of magnetic tapes T in parallel. Specifically, the second generation unit 44 executes processing of generating a packed object in each of the same number of threads as the number of magnetic tapes T.

As illustrated in Fig. 9 as an example, the controller 46 performs control of recording a plurality of packed objects generated by the second generation unit 44 on a plurality of magnetic tapes T in one-to-one correspondence. In the present embodiment, the controller 46 executes control of recording the plurality of packed objects on the plurality of magnetic tapes T in parallel. Specifically, the controller 46 executes control of recording the packed objects on the magnetic tapes T in each of the same number of threads as the number of the magnetic tapes T. As the control, for example, the controller 46 executes processing of transmitting the packed objects and recording instructions of the packed objects to the tape drive 18.

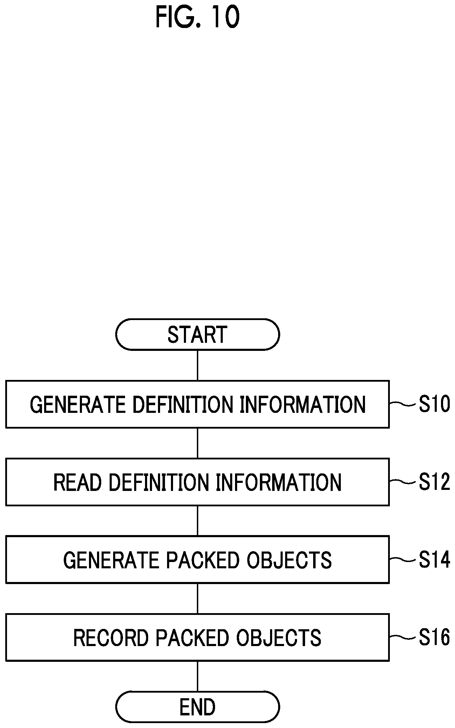

Next, an operation of the information processing apparatus 12 according to the present embodiment will be described with reference to Fig. 10. In a case where the CPU 20 executes the information processing program 30, object recording processing illustrated in Fig. 10 is executed. The object recording processing illustrated in Fig. 10 is executed, for example, in a case where an execution instruction is input by a user, or in a case where a total value of sizes of pieces of data stored in the storage unit 22 is equal to or larger than a certain value.

In step S10 of Fig. 10, as described above, the first generation unit 40 generates definition information that is common to the plurality of magnetic tapes T and defines the plurality of objects included in the packed object. In addition, the first generation unit 40 performs control of storing the generated definition information in the storage unit 22.

In step S12, the definition information stored in the storage unit 22 in step S10 is read. In step S14, as described above, the second generation unit 44 generates the same number of packed objects as the number of magnetic tapes T based on the definition information which is read in step S12, the packed object being obtained by grouping a plurality of objects. In step S16, as described above, the controller 46 performs control of recording the plurality of packed objects generated in step S14 on the plurality of magnetic tapes T in one-to-one correspondence. In a case where processing of step S16 is completed, object recording processing is completed.

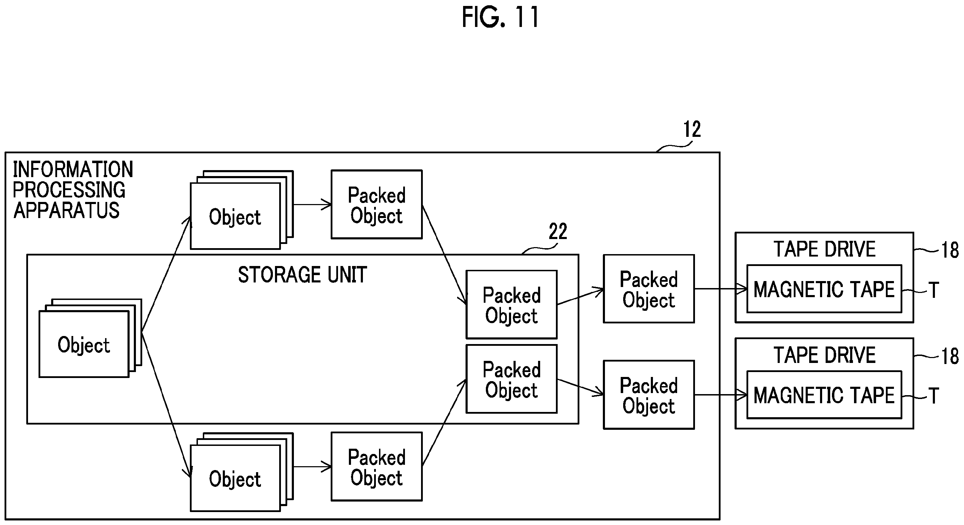

As illustrated in Fig. 11 as an example, in a case where the definition information is not used, the plurality of objects stored in the storage unit 22 are read, and a plurality of packed objects are generated from the plurality of objects which are read. Further, in this case, the plurality of generated packed objects are stored in the storage unit 22, the plurality of packed objects stored in the storage unit 22 are read, and the plurality of read packed objects are recorded on the plurality of magnetic tapes T in one-to-one correspondence.

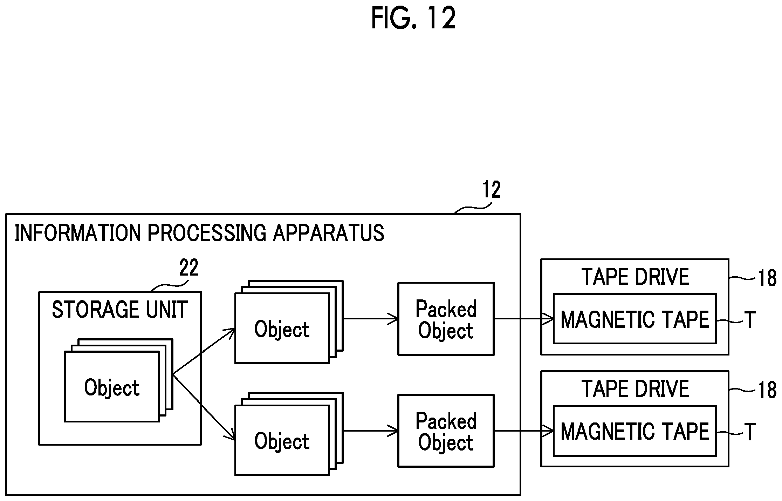

As illustrated in Fig. 12 as an example, in the present embodiment, common definition information is used. Thus, the plurality of objects stored in the storage unit 22 are read, and a plurality of packed objects are generated from the plurality of objects which are read. Further, in this case, the plurality of generated packed objects are recorded on the plurality of magnetic tapes T in one-to-one correspondence. Therefore, according to the present embodiment, it is possible to reduce a load on the storage unit 22 in which the objects are stored in a case where the objects are recorded on the magnetic tapes T.

Further, in the present embodiment, processing of generating a plurality of packed objects is executed in parallel. For example, in a case where packed objects are generated according to a packing rule in each of a plurality of threads, the objects corresponding to the packing rule may differ due to a difference in execution timing of each of the threads. In this case, the objects included in the packed objects to be recorded on each of the plurality of magnetic tapes T differ. On the other hand, in the present embodiment, the packed objects are generated based on the common definition information generated according to the packing rule. Therefore, the objects included in the packed objects to be recorded on each of the plurality of magnetic tapes T can be the same.

In addition, in the present embodiment, metadata having a relatively small size is included in the definition information. In a case of data having a relatively small size, a ratio of loads in file open and file close to loads in file open, file read, and file close in a case where the data is read from the storage unit 22 is high. In the present embodiment, metadata having a relatively small size is included in the definition information. Thus, the metadata can be extracted from the definition information by reading the definition information from the storage unit 22. Therefore, in this case, the number of times of file open and file close is one in a case of reading the definition information from the storage unit 22. Thereby, it is possible to reduce a load on the storage unit 22 as compared with a case where the metadata is individually read from the storage unit 22.

In the embodiment, in a case of generating the definition information, the first generation unit 40 may include a storage path of data having a size equal to or larger than a threshold value in the definition information, and include data having a size smaller than the threshold value in the definition information. In this case, the threshold value is set to a relatively small value, for example, a value obtained by adding a margin to an upper limit value of the size of the metadata. Further, in this case, in a case of generating the packed object, the second generation unit 44 reads data having a size equal to or larger than the threshold value from the storage unit 22 based on the storage path included in the definition information, and reads data having a size smaller than the threshold value from the definition information.

In addition, in the embodiment, a case where the metadata is included in the definition information has been described. On the other hand, the present invention is not limited thereto. For example, as in the case of data, for the metadata, a form in which a storage path of the metadata is included in the definition information may be used.

In addition, in the embodiment, a case where a storage path of data is included in the definition information has been described. On the other hand, the present invention is not limited thereto. For example, as in the case of the metadata, for the data, a form in which the data is included in the definition information may be used.

Further, in the embodiment, a case where the technique according to the present disclosure is applied to an object storage system has been described. On the other hand, the present disclosure is not limited thereto. The technique according to the present disclosure may be applied to a file storage system that handles data in file units.

Further, in the embodiment, for example, as a hardware structure of a processing unit that executes various processing such as the first generation unit 40, the reading unit 42, the second generation unit 44, and the controller 46, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

### Explanation of References

10: information processing system
12: information processing apparatus
14: tape library
18: tape drive
20: CPU
21: memory
22: storage unit
23: display
24: input device
25: network I/F
26: external I/F
27: bus
30: information processing program
40: first generation unit
42: reading unit
44: second generation unit
46: controller
T: magnetic tape

## Claims

1. An information processing apparatus that performs control of recording the same data on a plurality of magnetic tapes, the apparatus comprising:
at least one processor,
wherein the processor is configured to
read definition information that is common to the plurality of magnetic tapes and defines a plurality of pieces of data included in archive data,
generate the same number of pieces of the archive data as the number of the magnetic tapes based on the definition information, the archive data being obtained by grouping the plurality of pieces of data, and
perform control of recording the plurality of pieces of generated archive data on the plurality of magnetic tapes in one-to-one correspondence.

2. The information processing apparatus according to claim 1,
wherein the definition information includes information representing a storage position on a storage device at which data having a size equal to or larger than a threshold value is stored, and
the processor is configured to read data having a size equal to or larger than the threshold value from the storage device based on the information in a case of generating the archive data.

3. The information processing apparatus according to claim 2,
wherein the definition information includes data having a size smaller than the threshold value, and
the processor is configured to read data having a size smaller than the threshold value from the definition information in a case of generating the archive data.

4. The information processing apparatus according to any one of claims 1 to 3,
wherein the processor is configured to execute processing of generating the same number of pieces of archive data as the number of the magnetic tapes in parallel.

5. The information processing apparatus according to any one of claims 1 to 4,
wherein the archive data is obtained by grouping a plurality of objects including data and metadata related to the data,
the definition information includes the metadata of each of the plurality of objects included in the archive data and information representing a storage position on a storage device at which the data corresponding to the metadata is stored, and
the processor is configured to read the data from the storage device based on the information, and read the metadata from the definition information in a case of generating the archive data.

6. An information processing method executed by a processor of an information processing apparatus that includes at least one processor and performs control of recording the same data on a plurality of magnetic tapes, the method comprising:
reading definition information that is common to the plurality of magnetic tapes and defines a plurality of pieces of data included in archive data;
generating the same number of pieces of the archive data as the number of the magnetic tapes based on the definition information, the archive data being obtained by grouping the plurality of pieces of data; and
performing control of recording the plurality of pieces of generated archive data on the plurality of magnetic tapes in one-to-one correspondence.

7. A computer-readable storage medium storing an information processing program for causing a processor of an information processing apparatus that includes at least one processor and performs control of recording the same data on a plurality of magnetic tapes to execute a process comprising:
reading definition information that is common to the plurality of magnetic tapes and defines a plurality of pieces of data included in archive data;
generating the same number of pieces of the archive data as the number of the magnetic tapes based on the definition information, the archive data being obtained by grouping the plurality of pieces of data; and
performing control of recording the plurality of pieces of generated archive data on the plurality of magnetic tapes in one-to-one correspondence.
